# FASCICULE DE BREVET EUROPEEN

(11) **EP 4 099 117 B1**
(45) Date de publication et mention de la délivrance du brevet: **05.07.2023**
(21) Numéro de dépôt: 22170920.7
(22) Date de dépôt: 29.04.2022
(51) Int. Cl.: G05D 1/00, G05D 1/06

(54) **PROCÉDÉ D'ASSISTANCE AU PILOTAGE D'UN GIRAVION COMPORTANT AU MOINS DEUX MOTEURS**
HILFSVERFAHREN ZUM STEUERN EINES DREHFLÜGELFLUGZEUGS, DAS MINDESTENS ZWEI MOTOREN UMFASST
METHOD FOR ASSISTING THE PILOTING OF A ROTORCRAFT COMPRISING AT LEAST TWO ENGINES

(30) Priorité: 31.05.2021 FR 2105645
(43) Date de publication de la demande: 07.12.2022
(73) Titulaire: Airbus Helicopters, 13725 Marignane Cedex (FR)
(72) Inventeur: RAYNAUD, Guillaume, 13006 Marseille (FR); CALMES, Nicolas, 13300 Salon De Provence (FR)
(74) Mandataire: GPI Brevets

(56) Documents cités:
- EP-A1- 3 444 696
- DE-A1- 4 420 059
- US-B1- 6 527 225
- US-B2- 9 193 450

## Description

La présente invention concerne un procédé d'assistance au pilotage d'un giravion qui peut être mis en oeuvre lors d'une phase de décollage ou d'atterrissage du giravion.

Un tel giravion comporte au moins deux moteurs par exemple thermiques et/ou électriques et un tel procédé d'assistance peut alors permettre d'assister un pilote afin de réaliser une manoeuvre selon une procédure de pilotage du giravion de type catégorie A (Cat-A). Une telle procédure peut notamment consister en une phase de décollage ou d'atterrissage sollicitant très fortement les performances des au moins deux moteurs.

De tels procédés d'assistance au pilotage connus sont notamment décrits dans les documents US6527225 et US6629023 et appliqués respectivement une phase de décollage et lors d'une phase d'atterrissage.

Dans ce cas, si une panne de l'un des moteurs se produit lors de l'une de ces phases, le système d'assistance mettant en oeuvre un tel procédé d'assistance peut alors permettre de piloter le giravion en suivant un profil d'atterrissage d'urgence pour atteindre un point de poser prédéterminé. Un tel profil comporte alors une trajectoire de repli en trois dimensions que le giravion doit suivre à chaque instant.

Cependant dans certaines conditions, il peut se révéler complexe, voire impossible, pour le giravion de suivre une telle trajectoire en trois dimensions. En outre, les contraintes liées à la masse des équipements embarqués à bord d'un giravion sont également un frein.

On connaît également, tels que décrits dans les documents EP3444696 et FR 2900385, d'autres procédés d'aide au pilotage d'un giravion lors d'une phase de décollage.

Plus particulièrement, le document EP3444696 concerne un système et un procédé pour fournir des repères de guidage à un pilote pour effectuer une manoeuvre de décollage de catégorie A avec un giravion.

Le système de gestion de vol demande au pilote de décoller puis d'augmenter le pas collectif et d'appliquer une commande latérale sur le manche de commande de pas cyclique afin d'obtenir une montée latérale lente vers un point de décision.

Si le giravion subit une panne moteur avant d'atteindre le point de décision alors la procédure de décollage est interrompue.

En outre, le système indique au pilote de commencer une descente et fournit alors des repères au pilote pour maintenir à la fois un régime rotor acceptable et une assiette du giravion sensiblement horizontale.

La présente invention a alors pour objet de proposer un procédé alternatif d'assistance au pilotage permettant de s'affranchir des limitations mentionnées ci-dessus. Un tel procédé d'assistance peut être mis en oeuvre aussi bien lors d'un décollage ou d'un atterrissage du giravion.

Un objectif de l'invention est ainsi notamment de pouvoir garantir la mise en oeuvre d'une phase d'atterrissage d'urgence pour un giravion.

L'invention se rapporte donc à un procédé d'assistance au pilotage d'un giravion comportant au moins deux moteurs aptes à transmettre, hors cas de panne, un couple moteur à au moins un rotor principal assurant au moins une sustentation du giravion dans l'air, le giravion comportant des organes aérodynamiques permettant de piloter le giravion, le procédé d'assistance comportant les étapes suivantes :
- détermination périodique d'une position courante du giravion,
- première comparaison périodique entre la position courante et un point de décision, la première comparaison périodique permettant de déterminer que la position courante du giravion présente une hauteur courante inférieure à une hauteur prédéterminée du point de décision,
- identification d'une défaillance moteur d'au moins un moteur parmi les au moins deux moteurs,
- seconde comparaison périodique entre la position courante du giravion et un point de poser,
- détermination périodique d'un profil d'atterrissage d'urgence, le profil d'atterrissage d'urgence étant généré au moins en fonction d'un résultat de la seconde comparaison périodique, la détermination périodique du profil d'atterrissage d'urgence est fonction d'une vitesse de rotation minimale (NRmin) du au moins un rotor principal, et
- génération périodique d'ordres de commande pour commander les organes aérodynamiques et piloter le giravion selon le profil d'atterrissage d'urgence la génération périodique d'ordres de commande étant mise en oeuvre lorsque d'une part la position courante du giravion présente une hauteur courante inférieure à la hauteur prédéterminée du point de décision et d'autre part une défaillance moteur est identifiée.

Le profil d'atterrissage d'urgence est alors dissocié d'une trajectoire à suivre, mais permet de réaliser directement une gestion de la portance d'une voilure tournante du giravion au moins au moyen de la vitesse de rotation minimale (NRmin) du au moins un rotor principal en dessous de laquelle la vitesse de rotation courante du au moins un rotor principal ne doit pas descendre.

Les ordres de commande sont alors générés au moins pour maintenir la vitesse de rotation courante du ou des rotors principaux au-dessus de, ou égal à, la vitesse de rotation minimale (NRmin).

En outre, selon un premier mode de réalisation, la génération périodique d'ordres de commande peut être opérée totalement automatiquement par un système de commande de vol automatique.

Selon un second mode de réalisation, la génération périodique d'ordres de commande peut être opérée partiellement automatiquement par un système de commande de vol automatique et partiellement manuellement par un pilote du giravion.

Dans ce cas et selon une possibilité, lorsque la hauteur courante du giravion est supérieure à une valeur de seuil prédéterminée, la génération périodique d'ordres de commande peut être opérée automatiquement par le système de commande de vol automatique.

Cependant, lorsque la hauteur courante du giravion est, ou devient, inférieure ou égale à la valeur de seuil prédéterminée, le système de commande de vol automatique peut être inhibé pour permettre à un pilote du giravion de générer manuellement des ordres de commande.

Selon un premier exemple de réalisation, la première comparaison périodique entre la position courante et le point de décision peut être opérée automatiquement.

Selon un second exemple de réalisation compatible avec le premier exemple, la première comparaison périodique entre la position courante et le point de décision peut également être opérée sous la dépendance d'une étape d'activation manuelle par un membre d'équipage du giravion.

Selon l'invention, un tel procédé est remarquable en ce que, la détermination périodique du profil d'atterrissage d'urgence est générée en fonction d'un taux de descente prédéterminé du giravion.

Autrement dit, la génération du profil d'atterrissage d'urgence peut comporter une sous-étape de contrôle de la vitesse de rotation courante du ou des rotors principaux et une sous-étape de contrôle du taux de descente du giravion, la sous-étape de contrôle de la vitesse de rotation courante du ou des rotors principaux étant alors opérée prioritairement par rapport à la sous-étape de contrôle du taux de descente du giravion.

En outre, la sous-étape de contrôle du taux de descente du giravion permet d'inciter le pilote ou le pilote automatique du giravion à actionner des organes de commande tels un levier ou un manche de commande d'un pas des pales du rotor pour faire varier collectivement ou cycliquement le pas de ces pales. De plus, le pilote n'est pas insisté à maintenir l'assiette sensiblement horizontale du giravion et peut notamment faire piquer ou cabrer le giravion si besoin.

Ainsi, une telle sous-étape de contrôle du taux de descente du giravion permet de participer à l'entraînement en rotation du rotor et par conséquent de le maintenir au dessus de la vitesse de rotation minimale en limitant la puissance consommée par le moteur encore en fonctionnement. Le pilote peut alors être incité à agir sur un levier de pas collectif pour suivre le taux de descente prédéterminé et non pas sur une commande gaz pour maintenir la vitesse de rotation du rotor.

La génération du profil d'atterrissage d'urgence en fonction taux de descente du giravion permet ainsi de limiter les sollicitations au niveau du ou des moteurs encore en fonctionnement lors de la panne d'un autre moteur.

Par ailleurs, lorsque la puissance délivrée par le ou les moteurs encore fonctionnants parmi les au moins deux moteurs est suffisante, la détermination périodique du profil d'atterrissage d'urgence peut être générée en respectant à la fois un objectif de vitesse de rotation du rotor et un objectif de taux de descente vitesse.

Cependant, lorsque la puissance délivrée par le ou les moteurs encore fonctionnants parmi les au moins deux moteurs est insuffisante, la détermination périodique du profil d'atterrissage d'urgence peut être générée en respectant uniquement l'objectif de vitesse de rotation du rotor.

En pratique, le taux de descente prédéterminé peut être variable en fonction de la hauteur courante du giravion.

En d'autres termes, la sous-étape de contrôle du taux de descente du giravion peut permettre de modifier la valeur courante du taux de descente prédéterminé à respecter sous la dépendance de la hauteur à laquelle se trouve le giravion. En pratique, plus le giravion est proche du sol, plus la valeur du taux de descente prédéterminé peut être faible.

Ainsi, lorsque la hauteur courante du giravion est supérieure ou égale à 200 pieds (60,96 mètres), le taux de descente prédéterminé peut être égal à une première valeur de seuil comprise entre -1200 et - 800 pieds par minute (entre -365,76 et - 243,84 mètres par minute).

Par ailleurs, lorsque la hauteur courante du giravion est inférieure ou égale à 100 pieds (30,48 mètres), le taux de descente prédéterminé peut être égal à une seconde valeur de seuil comprise entre -700 et -300 pieds par minute (entre -213,36 et - 91,44 mètres par minute).

De même, lorsque la hauteur courante du giravion est comprise entre 100 et 200 pieds (30,48 et 60,96 mètres), le taux de descente prédéterminé peut varier selon une fonction décroissante linéaire entre une première valeur de seuil comprise entre -1200 et - 800 pieds par minute (entre -365,76 et -243,84 mètres par minute) et une seconde valeur de seuil comprise entre -700 et -300 pieds par minute (entre -213,36 et -91,44 mètres par minute).

Par exemple, le taux de descente prédéterminé peut être choisi à une valeur de -1000 pieds par minute (-304,8 mètres par minute) lorsque la hauteur courante est supérieure à 200 pieds (60,96 mètres) et peut diminuer linéairement jusqu'à -500 pieds par minute (-152,4 mètres par minute) pour rester à cette valeur prédéterminer en dessous de 100 pieds (30,48 mètres).

En pratique, la vitesse de rotation minimale (NRmin) peut être une valeur prédéterminée et fixe comprise entre 94% et 105% d'une vitesse de rotation nominale (NRnom) mémorisée du au moins un rotor principal.

Par exemple, la vitesse de rotation nominale (Nrnom) peut être de 321,6 tr.min⁻¹ (tour par minute) et la vitesse de rotation minimale (NRmin) peut être choisie égale à 102% de cette valeur soit environ 328,2 tr.min⁻¹ (tour par minute).

En outre, la vitesse de rotation nominale (NRnom) du au moins un rotor principal est une vitesse de rotation permettant par exemple au giravion d'effectuer une phase de vol de croisière à vitesse et hauteur constante. En outre, la vitesse de rotation minimale (NRmin) peut être choisie supérieure à la vitesse de rotation nominale (NRnom) car un tel procédé d'assistance au pilotage est mis en oeuvre dans une phase de vol distincte d'une phase de vol de croisière telle que des phases de vol de décollage ou d'atterrissage.

Avantageusement, le au moins un rotor principal comportant au moins deux pales, les ordres de commande peuvent modifier collectivement un pas de chacune des au moins deux pales.

De tels ordres de commande sont alors transmis à des servocommandes ou vérins permettant de déplacer par exemple au moins un plateau oscillant modifiant collectivement le pas des pales. Cette modification collective du pas des pales permet ainsi de contrôler à la fois la vitesse de rotation du rotor principal pour qu'elle ne descende pas en dessous de la vitesse de rotation minimum (NRmin) et le taux de descente du giravion.

Selon un exemple de réalisation de l'invention compatible avec les précédents, la détermination périodique du profil d'atterrissage d'urgence peut être fonction d'une part d'une accélération longitudinale maximale du giravion par rapport au sol et d'autre part d'une vitesse longitudinale maximale d'avancement du giravion par rapport au sol.

En d'autres termes, le profil d'atterrissage d'urgence présente également des contraintes sur le pilotage du giravion selon son axe de tangage. En effet, pour pouvoir atterrir sans risques au point de poser, le giravion doit parvenir à réduire sa vitesse longitudinale c'est-à-dire orientée suivant une direction allant d'une zone arrière vers une zone avant du giravion. En outre, une telle réduction de la vitesse longitudinale est alors opérée en modifiant les ordres de commande pour commander les organes aérodynamiques permettant de modifier un angle de tangage du giravion.

De telles contraintes sur le contrôle en tangage du giravion sont générées lors de l'étape de détermination périodique d'un profil d'atterrissage d'urgence et empêchent le giravion de dépasser ces valeurs d'accélération longitudinale maximale et de vitesse longitudinale maximale d'avancement.

En pratique, l'accélération longitudinale maximale du giravion peut être variable en fonction d'une hauteur courante du giravion et d'une marge de puissance des au moins deux moteurs lorsque le giravion est dans une phase de vol stationnaire avec une vitesse verticale nulle.

Autrement dit, la valeur d'accélération longitudinale maximale que le giravion ne peut pas dépasser n'est pas fixe et peut varier dans le temps sous la dépendance de la hauteur courante du giravion ainsi que de la marge de puissance des au moins deux moteurs lorsque le giravion est en vol stationnaire.

Par exemple, l'accélération longitudinale maximale peut être comprise entre 0,5 et 1,5 mètres par seconde au carré (m.s⁻²).

Plus précisément, cette accélération longitudinale maximale à ne pas dépasser peut être comprise entre 0,75 et 1 mètres par seconde au carré (m.s⁻²).

De même, la vitesse longitudinale maximale peut être variable en fonction d'un taux de descente courant du giravion.

Par suite, la valeur de seuil de vitesse longitudinale maximale à ne pas dépasser n'est pas fixe et peut également varier dans le temps sous la dépendance du taux de descente courant du giravion.

Avantageusement, le procédé d'assistance peut comporter au moins une étape d'affichage sur un dispositif d'affichage d'informations représentatives d'un premier écart entre la position courante et le point de poser.

Un tel affichage de ce premier écart permet alors au pilote de surveiller rapidement et sans effort la mise en oeuvre d'un tel procédé d'assistance au pilotage d'un giravion. En outre, une telle surveillance est particulièrement appréciée lorsque la génération d'ordres de commande pour commander les organes aérodynamiques est opérée de façon automatique par le système de pilotage automatique du giravion.

Un tel agencement permet notamment de diminuer la charge de travail de l'équipage lorsqu'une panne d'un moteur se produit. L'équipage peut alors contrôler très simplement que le giravion se rapproche de façon sécurisée du point de poser.

De façon alternative ou complémentaire, le procédé d'assistance peut comporter au moins une étape d'affichage sur un dispositif d'affichage d'informations représentatives d'un second écart entre la position courante et une zone comportant un obstacle.

De même que précédemment pour le premier écart, une telle étape d'affichage d'informations représentatives d'un second écart permet au pilote de surveiller rapidement et sans effort la mise en oeuvre du procédé d'assistance au pilotage.

Selon un exemple de réalisation de l'invention, les informations affichées peuvent être représentatives d'une position angulaire en azimut du giravion fonction de la position courante du giravion par rapport au point de poser et/ou par rapport à la zone comportant un obstacle.

Un secteur angulaire est alors affiché selon une vue en perspective d'un cadran de boussole comportant une échelle graduée de forme circulaire ou elliptique et au moins une information de cap. La couleur, la forme et/ou la largeur de ce secteur angulaire peuvent être modifiées en fonction de la valeur du premier ou du deuxième écart.

Les informations affichées permettent alors de fournir un signal d'alarme lorsque, par exemple, un des écarts est inférieur à une valeur de seuil prédéterminée.

Par exemple, plusieurs niveaux d'alarmes sont possibles en utilisant plusieurs valeurs de seuil prédéterminées. Un premier niveau d'alarme peut alors être indiqué au pilote en affichant un secteur angulaire coloré, par exemple en orange, lorsqu'une première valeur de seuil prédéterminée est franchie. Un second niveau alarme peut être indiqué au pilote en affichant un secteur angulaire coloré, par exemple en rouge, lorsque une seconde valeur de seuil prédéterminée, distincte de la première valeur de seuil prédéterminée, est franchie.

Selon un autre exemple de réalisation de l'invention compatible avec les précédents, le procédé peut comporter au moins une étape d'affichage sur un dispositif d'affichage d'informations représentatives d'un troisième écart entre la hauteur courante du giravion et la hauteur prédéterminée du point de décision.

Un tel troisième écart est alors avantageusement représenté au moyen d'une échelle graduée verticale et d'un bandeau coloré dont la couleur peut varier en fonction de la valeur de ce troisième écart.

Comme précédemment, les informations affichées permettent alors de fournir un signal d'alarme visuel lorsque ce troisième écart devient inférieur à une valeur de seuil prédéterminée.

Par exemple, plusieurs niveaux d'alarmes sont envisageables en utilisant plusieurs valeurs de seuil prédéterminées.

Initialement de couleur verte, le bandeau coloré peut passer par exemple à une couleur orange, lorsqu'une première valeur de seuil prédéterminée est franchie. Un second niveau alarme peut être indiqué au pilote en affichant un bandeau coloré rouge, lorsque une seconde valeur de seuil prédéterminée, distincte de la première valeur de seuil prédéterminée, est franchie.

De plus, un point de décision au décollage ou à l'atterrissage peut être affiché avec ce troisième écart. La position de ce point de décision correspond alors à l'extrémité du bandeau coloré. Une fois, ce point de décision passé, le pilote du giravion peut alors commander manuellement une phase de vol automatisée d'éloignement également désignée en langue anglaise par les expressions « GO-AROUND » ou encore « FLY-AWAY ».

Au décollage ou à l'atterrissage, un bouton actionné par le pilote permet alors d'engager le mode GO-AROUND si le giravion se trouve à une hauteur courante supérieure à la hauteur du point de décision.

Le pilote peut toujours engager le mode GO-AROUND même en cas de panne moteur.

Lors d'une phase de décollage, le point de décision au décollage qui peut être préalablement saisi par le pilote est affiché avec une trajectoire du giravion pour permettre au pilote de décider s'il doit ou non faire une manoeuvre de type GO-AROUND.

En montée au décollage, le giravion se déplace en élévation jusqu'à ce que le pilote actionne le bouton GO-AROUND ou jusqu'à l'identification d'une défaillance moteur. Dans le cas d'une panne moteur, le giravion se pose alors automatiquement au point de poser d'où il est parti.

En descente en approche, le giravion se pose en suivant une trajectoire prédéfinie en trois dimensions si aucune panne ou défaillance d'un moteur n'est détectée. En revanche, en cas d'identification d'une défaillance moteur, le procédé d'assistance met en oeuvre la génération périodique d'ordres de commande pour commander les organes aérodynamiques et piloter le giravion pour suivre le profil d'atterrissage d'urgence fonction au moins de la vitesse de rotation minimale (NRmin) du au moins un rotor principal voire également du taux de descente prédéterminé.

Hors cas de panne moteur, le pilote peut également à tout moment manoeuvrer le bouton GO AROUND. Le point de décision à l'atterrissage est affiché avec une trajectoire d'atterrissage en trois dimensions pour fournir une aide au pilote dans sa prise de décision.

Comme précédemment, en cas d'identification d'une défaillance moteur, il n'y a alors plus de suivi d'une trajectoire en trois dimensions, mais le pilotage du giravion pour suivre le profil d'atterrissage d'urgence en fonction au mois de la vitesse de rotation du ou des rotors et éventuellement également du taux de descente du giravion.

L'invention et ses avantages apparaîtront avec plus de détails dans le cadre de la description qui suit avec des exemples donnés à titre illustratif en référence aux figures annexées qui représentent :
la figure 1, un schéma de principe d'un giravion permettant de mettre en oeuvre le procédé d'assistance conforme à l'invention,
la figure 2, un logigramme illustrant les étapes d'un procédé d'assistance conforme à l'invention,
la figure 3, une vue de côté illustrant des phases d'atterrissage d'urgence d'un giravion,
la figure 4, un vue illustrant une première étape d'affichage du procédé d'assistance, conformément à l'invention,
la figure 5, un vue illustrant une deuxième étape d'affichage du procédé d'assistance, conformément à l'invention,
la figure 6, un vue illustrant une troisième étape d'affichage du procédé d'assistance, conformément à l'invention, et
la figure 7, un vue illustrant une quatrième étape d'affichage du procédé d'assistance, conformément à l'invention.

Les éléments présents dans plusieurs figures distinctes sont affectés d'une seule et même référence.

Comme déjà évoqué, l'invention concerne un procédé d'assistance au pilotage d'un giravion.

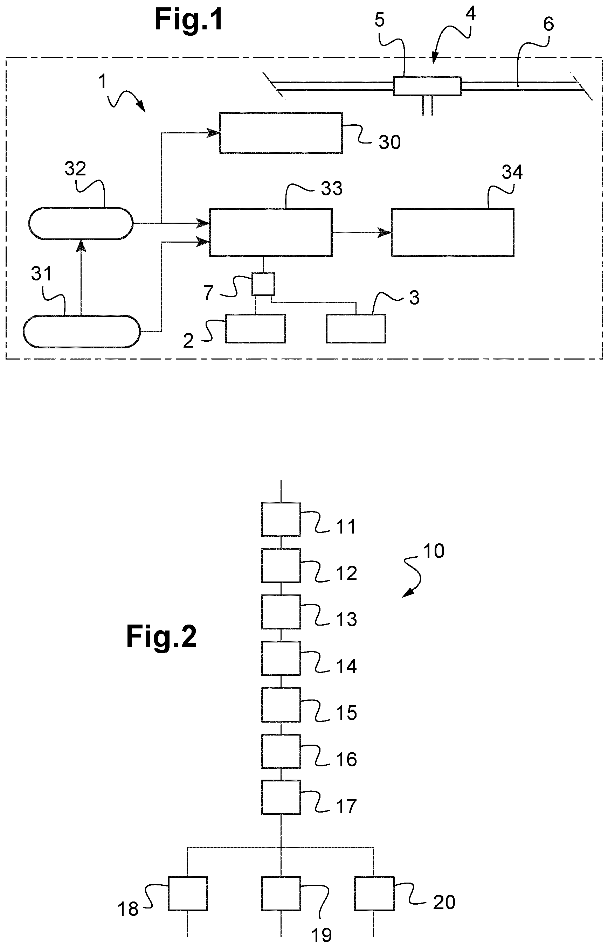

Tel que représenté à la figure 1, un tel giravion 1 comporte au moins deux moteurs 2, 3 aptes à transmettre, hors cas de panne, un couple moteur à au moins un rotor principal 4 assurant au moins une sustentation dans l'air du giravion 1. Un tel rotor principal 4 comporte alors au moins deux pales 6 formant au moins un des organes aérodynamiques 5 permettant de piloter le giravion 1.

En outre, un tel giravion 1 comporte également des actionneurs 34 tels que des servocommandes ou des vérins permettant de déplacer les organes aérodynamiques 5 tels que par exemple les pales 6, des volets ou encore des dérives permettant de piloter le giravion 1.

Ces actionneurs 34 peuvent ainsi recevoir des ordres de commande générés au moyen d'une unité de commande 33 telle que par exemple une unité de commande d'un système de pilotage automatique connue sous l'acronyme AFCS désignant en langue anglaise « Automatic Flight Control System ».

Par ailleurs, un tel giravion 1 comporte également des capteurs 32 reliés par voie filaire ou non filaire à l'unité de commande 33. De tels capteurs 32 peuvent notamment présenter des capteurs de position, de vitesse ou d'accélération du giravion 1, une centrale inertielle, un système anémobarométrique pour mesurer et transmettre à l'unité de commande 33 les effets causés par les ordres de commande transmis aux actionneurs 34.

En outre, le giravion 1 peut comporter au moins un système de mission 31 relié par voie filaire ou non filaire à l'unité de commande 33 et aux capteurs 32. Un tel système de mission 31 est configuré pour paramétrer l'unité de commande 33 et éventuellement les capteurs 32 en fonction de contraintes de vol liées à la mission que doit effectuer le giravion 1 ou de préférences de pilotage.

Ce système de mission 31 peut notamment comporter une interface homme-machine permettant au pilote de saisir des préférences relatives au profil d'atterrissage d'urgence.

Par suite, en cas de panne de l'un des au moins deux moteurs 2, 3, un procédé d'assistance 10 au pilotage du giravion 1 tel que représenté à la figure 2 peut être mis en oeuvre.

Un tel procédé d'assistance 10 comporte ainsi une pluralité d'étapes et notamment éventuellement une étape préliminaire de détermination 11 d'un point de décision TDP, LDP et d'un point de poser PP. Une telle détermination 11 d'un point de décision TDP, LDP peut par exemple être mise en oeuvre au moyen du système de mission 31 qui transmet alors un signal représentatif du point de décision TDP, LDP et du point de poser PP à l'unité de commande 33.

Le point de décision peut alors être un point de décision au décollage TDP et/ou un point de décision à l'atterrissage LDP. En effet, en fonction du type de phase de vol pendant laquelle se produit la panne d'un moteur 2, 3 des informations concernant deux points de décision distincts peuvent être utiles pour la mise en oeuvre du procédé d'assistance.

Le point de poser PP peut quant à lui être le point d'atterrissage si le giravion 1 est en phase d'atterrissage ou le point de décollage initial si le giravion 1 est en phase de décollage. L'unité de commande 33 est en outre apte à déterminer si le giravion est en phase de décollage ou d'atterrissage en fonction notamment des ordres de pilotage qu'elle génère.

Une fois cette étape de définition 11 mise en oeuvre, le giravion 1 peut alors effectuer ou débuter sa mission.

Le procédé d'assistance 10 comporte alors ensuite une étape de détermination périodique 12 d'une position courante du giravion 1. Une telle position courante du giravion 1 est alors définie dans un référentiel par exemple un référentiel terrestre dont l'origine est le point de poser.

Une telle étape d'identification périodique 12 peut être réalisée au moyen des capteurs 32 et/ou d'autres capteurs comportant notamment un récepteur d'un système de localisation par satellites.

Les capteurs 32 permettent alors de mesurer la position courante du giravion 1 et transmettent ainsi un signal représentatif de la position courante du giravion 1 à l'unité de commande 33.

Le procédé 10 comporte également une étape de première comparaison périodique 13 entre la position courante et le point de décision TDP, LDP. Cette première comparaison périodique 13 permet alors d'identifier que la position courante du giravion 1 présente une hauteur courante inférieure à une hauteur prédéterminée du point de décision TDP, LDP.

Cette première comparaison périodique 13 peut ainsi être mise en oeuvre à partir du signal représentatif de la position courante du giravion 1 et du signal représentatif du point de décision TDP, LDP par l'unité de commande 33. Une telle unité de commande 33 est ainsi équipée d'une unité de traitement comportant un calculateur ou un comparateur pour effectuer périodiquement des comparaisons entre la hauteur courante et la hauteur prédéterminée du point de décision TDP, LDP. Cette première comparaison périodique 13 permet ainsi de mettre en oeuvre une sous étape d'identification que la hauteur courante du giravion 1 est inférieure à la hauteur prédéterminée.

Le procédé d'assistance 10 comporte alors une étape d'identification d'une défaillance 14 d'un au moins des au moins deux moteurs 2, 3. Une telle étape d'identification d'une défaillance 14 peut être mise en oeuvre au moyen par exemple d'un système 7 connu sous l'expression en langue anglaise « Full Authority Digital Engine Control » et son acronyme FADEC. Un tel système FADEC 7 permet alors d'identifier une défaillance moteur de l'un des moteurs 2,3 et transmet alors un signal représentatif de cette identification d'une défaillance moteur 14 à l'unité de commande 33.

Le système FADEC 7 peut par exemple comporter des capteurs mesurant une baisse d'un couple moteur sur un arbre moteur du moteur 2, 3 défaillant ou encore des capteurs de pression ou de température mesurant une anomalie de fonctionnement du moteur 2, 3.

Le système FADEC 7 peut notamment comporter une unité de traitement comportant un calculateur ou un comparateur pour comparer les mesures issues de capteurs par exemple de couple, de pression ou de température avec des valeurs de seuil prédéterminées. Lorsqu'une des valeurs de seuil prédéterminées est dépassée par les mesures, cette unité de traitement peut alors identifier la défaillance d'un moteur 2, 3.

Par ailleurs, le procédé d'assistance 10 comporte une étape de seconde comparaison périodique 15 entre la position courante du giravion 1 et le point de poser PP.

Cette seconde comparaison périodique 15 peut ainsi être mise en oeuvre par l'unité de commande 33 munie d'une unité de traitement comportant notamment un calculateur ou un comparateur pour effectuer périodiquement des comparaisons entre la position courante déterminée et transmise par les capteurs 33 et le point de poser PP déterminé et transmis par le système mission 31.

Le procédé d'assistance 10 comporte une étape de détermination périodique 16 d'un profil d'atterrissage d'urgence, ledit profil d'atterrissage d'urgence étant généré au moins en fonction d'un résultat de l'étape de seconde comparaison périodique 15. En outre, une telle étape de détermination périodique 16 du profil d'atterrissage d'urgence est mise en oeuvre en fonction d'une vitesse de rotation minimale NRmin du au moins un rotor principal 4 et éventuellement également d'un taux de descente prédéterminé du giravion 1.

Cette étape de détermination périodique 16 d'un profil d'atterrissage d'urgence peut ainsi être mise en oeuvre par l'unité de commande 33 équipée d'une unité de traitement comportant notamment un calculateur pour calculer périodiquement la vitesse de rotation minimale NRmin du au moins un rotor principal 4 et éventuellement le taux de descente prédéterminé du giravion 1.

Un tel calcul du taux de descente prédéterminé du giravion 1 peut par exemple utiliser un tableau de valeurs stockées dans un mémoire, des lois de variation en fonction d'un ou plusieurs paramètres et/ou des équations mathématiques.

Le procédé d'assistance 10 comporte une étape de génération périodique 17 d'ordres de commande pour commander les organes aérodynamiques 5 et piloter le giravion 1 selon le profil d'atterrissage d'urgence.

Par suite, une telle étape de génération périodique 17 d'ordres de commande peut ainsi être mise en oeuvre par l'unité de commande 33 équipée d'une unité de traitement comportant notamment un calculateur pour effectuer périodiquement des calculs visant à vérifier que la vitesse de rotation du rotor principal 4 ne décroît pas en dessous de la vitesse de rotation minimale NRmin et éventuellement également que le giravion 1 suit bien le taux de descente prédéterminé.

Cette unité de commande 33 permet également de modifier les ordres de commandes des organes aérodynamiques 5 pour contrôler la vitesse de rotation du rotor principal 4 et éventuellement également le taux de descente du giravion 1 lorsque la puissance disponible est suffisante.

L'étape de génération périodique 17 d'ordres de commande permet alors par exemple de modifier collectivement un pas de chacune des pales 6 du rotor principal 4.

En outre, les étapes de première comparaison périodique 13, d'identification d'une défaillance 14, de seconde comparaison périodique 15, de détermination périodique 16 du profil d'atterrissage d'urgence et de génération périodique 17 d'ordres de commande peuvent être mise en oeuvre par l'unité de commande 33 équipée de plusieurs unités de traitement distinctes les unes des autres ou encore par une même unité de traitement permettant de mettre en oeuvre les différentes étapes précitées du procédé.

Alternativement, lorsque la puissance disponible est insuffisante, la détermination périodique 16 du profil d'atterrissage d'urgence peut respecter uniquement la vitesse de rotation minimale NRmin du au moins un rotor principal 4 et ne pas respecter le taux de descente prédéterminé du giravion 1.

En outre, la détermination périodique 16 du profil d'atterrissage d'urgence peut être également mise en oeuvre par l'unité de commande 33 pour que le giravion 1 respecte d'une part une accélération longitudinale maximale par rapport au sol et d'autre part une vitesse longitudinale maximale d'avancement par rapport au sol.

Une telle accélération longitudinale maximale du giravion 1 peut notamment être calculée par l'unité de commande 33 et varier en fonction de la hauteur courante du giravion 1 mesurée et transmise au moyen des capteurs 32 et d'une marge de puissance prédéterminée des au moins deux moteurs lorsque le giravion 1 est dans une phase de vol stationnaire avec une vitesse verticale nulle. Une telle marge de puissance peut par exemple être stockée dans une mémoire de l'unité de commande 33.

Par exemple, cette accélération longitudinale maximale du giravion 1 peut être comprise entre 0,5 et 1,5 mètres par seconde au carré (m.s⁻²).

La vitesse longitudinale maximale peut également être variable en fonction d'un taux de descente courant du giravion 1.

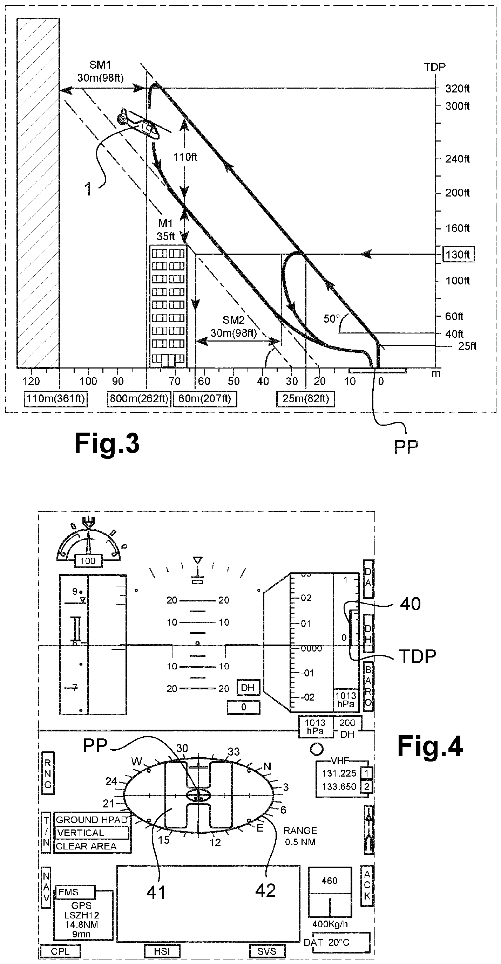

Tel que représenté à la figure 3, plusieurs profils d'atterrissage d'urgence peuvent être générés selon la hauteur du giravion 1 au moment de l'identification d'une défaillance 14 moteur. De tels profils d'atterrissage d'urgence peuvent notamment se distinguer l'un de l'autre par exemple en fonction de la position courante du giravion 1 lorsque la défaillance d'un moteur 2, 3 est identifiée.

Ainsi, le taux de descente prédéterminé peut être variable en fonction de la hauteur courante du giravion 1.

Par exemple, si la hauteur courante du giravion 1 est supérieure ou égale à 200 pieds (60,96 mètres), le taux de descente prédéterminé peut être égal à une première valeur de seuil comprise entre -1200 et - 800 pieds par minute (entre -365,76 et - 243,84 mètres par minute).

En revanche, si la hauteur courante du giravion 1 est inférieure ou égale à 100 pieds (30,48 mètres), le taux de descente prédéterminé peut être égal à une seconde valeur de seuil comprise entre -700 et -300 pieds par minute (entre -213,36 et - 91,44 mètres par minute).

Si la hauteur courante du giravion 1 est comprise entre 100 et 200 pieds (30,48 et 60,96 mètres), le taux de descente prédéterminé peut alors varier selon une fonction décroissante linéaire entre cette première valeur de seuil comprise entre -1200 et - 800 pieds par minute (entre -365,76 et -243,84 mètres par minute) et cette seconde valeur de seuil comprise entre -700 et -300 pieds par minute (entre -213,36 et -91,44 mètres par minute).

Ainsi, l'unité de commande 33 peut comporter également une mémoire permettant le stockage de cette première valeur de seuil et de cette seconde valeur de seuil. L'unité de commande 33 est alors reliée par voie filaire ou non filaire à un capteur de mesure de la hauteur courante du giravion 1 telle une radiosonde. L'unité de commande 33 est ainsi configurée pour adapter le taux de descente du profil d'atterrissage d'urgence sous la dépendance de la hauteur courante du giravion 1.

Selon un exemple avantageux, la vitesse de rotation minimale NRmin peut quant à elle être une valeur prédéterminée et fixe comprise entre 94% et 105% d'une vitesse de rotation nominale NRnom du au moins un rotor principal 4. De cette manière, une telle vitesse de rotation minimale NRmin peut quant à elle être stockée dans une mémoire de l'unité de traitement.

En outre, des marges longitudinales de sécurité SM1, SM2 orientées selon une direction longitudinale peuvent également être utilisées pour éviter toute collision avec un obstacle situé dans une zone arrière par rapport au giravion 1. De telles marges longitudinales de sécurité SM1, SM2 peuvent par exemple être de 30 mètres (environ 98 pieds).

De manière analogue, des marges verticales de sécurité M1 orientées selon une direction verticale peuvent également être utilisées pour éviter toute collision avec un obstacle situé dans une zone inférieure par rapport au giravion 1. De telles marges verticales de sécurité M1 peuvent par exemple être de 10 mètres (environ 35 pieds).

Tel que représenté à la figure 2, le procédé d'assistance 10 peut également comporter des étapes affichage 18, 19, 20 permettant au pilote du giravion 1 d'effectuer rapidement une surveillance du bon fonctionnement du procédé d'assistance 10.

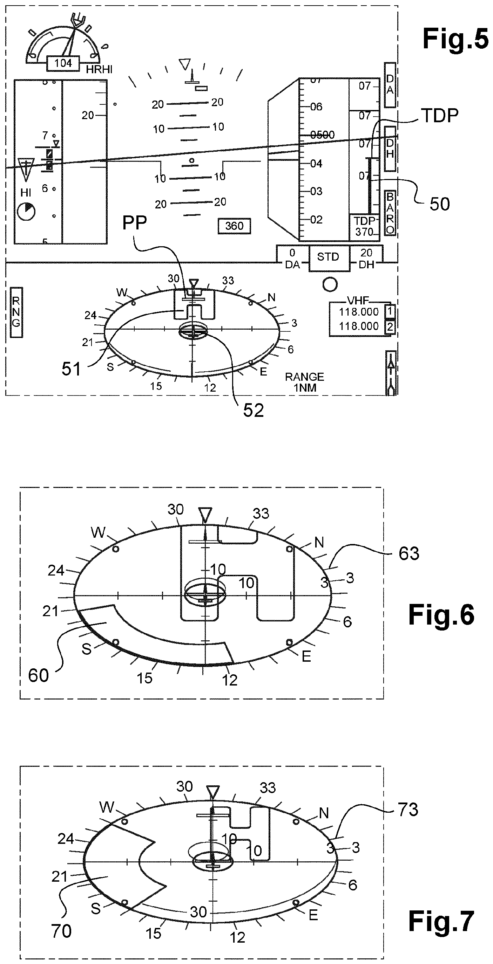

Telle que représentée aux figures 4 et 5, cette étape d'affichage 18 est mise en oeuvre au moyen du dispositif d'affichage 30 et permet d'afficher des informations représentatives d'un premier écart entre la position courante et le point de poser PP.

La position courante est ici illustrée sur le dispositif d'affichage 30 au moyen d'un premier repère 42, 52. Le point de poser PP est quant à lui illustré par un deuxième repère et une forme de H 41, 51 centrée sur le point de poser PP.

Le premier écart peut alors être représenté par une distance séparant le premier repère 42, 52 du deuxième repère ou encore de la forme de H 41, 51. La forme de H symbolise par exemple une piste d'atterrissage d'hélicoptère tel un héliport.

Tel que représenté à la figure 4, le procédé d'assistance 10 peut permettre d'effectuer une phase de décollage purement verticale. Dans ce cas, la forme de H reste centrée sur le premier repère 42 mais la taille du H décroît au fur et à mesure que le giravion 1 prend de l'altitude, puis croît à nouveau si une phase d'atterrissage d'urgence est mise en oeuvre.

Selon la figure 5, le procédé d'assistance 10 peut permettre d'effectuer une phase de décollage en reculant tel que représenté également à la figure 3. Dans ce cas, la forme de H 51 s'écarte alors du premier repère 52 au fur et à mesure que le giravion 1 prend de l'altitude.

Telle que représentée aux figures 6 et 7, l'étape d'affichage 19 sur le dispositif d'affichage 30 permet d'afficher des informations représentatives d'un second écart entre la position courante et une zone comportant un obstacle.

Les informations affichées sont représentatives d'une position angulaire en azimut du giravion fonction de sa position courante par rapport audit point de poser PP et/ou par rapport à ladite zone comportant un obstacle.

Un secteur angulaire 60 ,70 est alors affiché selon une vue en perspective d'un cadran de boussole 63, 73 comportant une échelle graduée de forme circulaire ou elliptique et au moins une information de cap. La couleur, la forme et/ou la largeur de ce secteur angulaire 60, 70 peuvent être modifiées en fonction de la valeur du premier ou du deuxième écart.

Les informations affichées permettent alors de fournir un signal d'alarme lorsque par exemple un des écarts est inférieur à une valeur de seuil prédéterminée.

Par exemple, plusieurs niveaux d'alarmes sont possibles en utilisant plusieurs valeurs de seuil prédéterminées. Tel que représenté à la figure 6, un premier niveau alarme peut alors être indiqué au pilote en affichant un secteur angulaire coloré 60, par exemple en orange et/ou avec une première épaisseur, lorsqu'une première valeur de seuil prédéterminée est franchie. Tel que représenté à la figure 7, un second niveau alarme peut être indiqué au pilote en affichant un secteur angulaire coloré 70, par exemple de couleur rouge et/ou avec une seconde épaisseur supérieure à la première épaisseur, lorsque une seconde valeur de seuil prédéterminée, distincte de la première valeur de seuil prédéterminée, est franchie.

Telle que représentée aux figures 4 et 5, l'étape d'affichage 20 peut permettre d'afficher sur le dispositif d'affichage 30 des informations représentatives d'un troisième écart entre la hauteur courante du giravion 1 et la hauteur prédéterminée du point de décision TDP, LDP.

Un tel troisième écart est ici représenté au moyen d'un bandeau coloré 40 ,50 s'étendant entre la hauteur prédéterminée du point de décision TDP et la hauteur du courante du giravion 1.

## Revendications

1. Procédé d'assistance (10) au pilotage d'un giravion (1) comportant au moins deux moteurs (2, 3) aptes à transmettre, hors cas de panne, un couple moteur à au moins un rotor principal (4) assurant au moins une sustentation dudit giravion (1) dans l'air, ledit giravion (1) comportant des organes aérodynamiques (5) permettant de piloter ledit giravion (1), ledit procédé d'assistance (10) comportant les étapes suivantes :
• détermination périodique (12) d'une position courante dudit giravion (1),
• première comparaison périodique (13) entre ladite position courante et un point de décision (TDP, LDP), ladite première comparaison périodique (13) permettant de déterminer que ladite position courante dudit giravion (1) présente une hauteur courante inférieure à une hauteur prédéterminée dudit point de décision (TDP, LDP),
• identification d'une défaillance (14) moteur d'au moins un moteur (2, 3) parmi les au moins deux moteurs (2, 3),
• seconde comparaison périodique (15) entre ladite position courante dudit giravion (1) et un point de poser (PP),
• détermination périodique (16) d'un profil d'atterrissage d'urgence, ledit profil d'atterrissage d'urgence étant généré au moins en fonction d'un résultat de ladite seconde comparaison périodique (15) et d'une vitesse de rotation minimale (NRmin) dudit au moins un rotor principal (4) à respecter, et
• génération périodique (17) d'ordres de commande pour commander lesdits organes aérodynamiques (5) et piloter ledit giravion (1) selon ledit profil d'atterrissage d'urgence, ladite génération périodique (17) d'ordres de commande étant mise en oeuvre lorsque d'une part ladite position courante dudit giravion (1) présente une hauteur courante inférieure à ladite hauteur prédéterminée dudit point de décision (TDP, LDP) et d'autre part une défaillance moteur est identifiée (14),
**caractérisé en ce que** ledit profil d'atterrissage d'urgence est généré en fonction d'un taux de descente prédéterminé dudit giravion (1) à respecter.

2. Procédé selon la revendication 1,
**caractérisé en ce que** ledit taux de descente prédéterminé est variable en fonction de ladite hauteur courante dudit giravion (1).

3. Procédé selon la revendication 2,
**caractérisé en ce que**, lorsque ladite hauteur courante dudit giravion (1) est supérieure ou égale à 200 pieds (60,96 mètres), ledit taux de descente prédéterminé est égal à une première valeur de seuil comprise entre -1200 et - 800 pieds par minute (entre - 365,76 et -243,84 mètres par minute).

4. Procédé selon l'une quelconque des revendications 2 à 3,
**caractérisé en ce que**, lorsque ladite hauteur courante dudit giravion (1) est inférieure ou égale à 100 pieds (30,48 mètres), ledit taux de descente prédéterminé est égal à une seconde valeur de seuil comprise entre -700 et -300 pieds par minute (entre - 213,36 et -91,44 mètres par minute).

5. Procédé selon l'une quelconque des revendications 2 à 4,
**caractérisé en ce que**, lorsque ladite hauteur courante dudit giravion (1) est comprise entre 100 et 200 pieds (30,48 et 60,96 mètres), ledit taux de descente prédéterminé varie selon une fonction décroissante linéaire entre une première valeur de seuil comprise entre -1200 et - 800 pieds par minute (entre -365,76 et - 243,84 mètres par minute) et une seconde valeur de seuil comprise entre -700 et -300 pieds par minute (entre -213,36 et -91,44 mètres par minute).

6. Procédé selon l'une quelconque des revendications 1 à 5,
**caractérisé en ce que** ladite vitesse de rotation minimale (NRmin) est une valeur prédéterminée et fixe comprise entre 94% et 105% d'une vitesse de rotation nominale (NRnom) mémorisée dudit au moins un rotor principal (4).

7. Procédé selon l'une quelconque des revendications 1 à 6,
**caractérisé en ce que**, ledit au moins un rotor principal (4) comportant au moins deux pales (6), lesdits ordres de commande modifient collectivement un pas de chacune desdites au moins deux pales (6).

8. Procédé selon l'une quelconque des revendications 1 à 7,
**caractérisé en ce que** ladite détermination périodique (16) dudit profil d'atterrissage d'urgence est fonction d'une part d'une accélération longitudinale maximale dudit giravion (1) par rapport au sol et d'autre part d'une vitesse longitudinale maximale d'avancement dudit giravion (1) par rapport au sol.

9. Procédé selon la revendication 8,
**caractérisé en ce que** ladite accélération longitudinale maximale dudit giravion (1) est variable en fonction d'une hauteur courante dudit giravion (1) et d'une marge de puissance desdits au moins deux moteurs lorsque ledit giravion (1) est dans une phase de vol stationnaire avec une vitesse verticale nulle.

10. Procédé selon l'une quelconque des revendications 8 à 9, **caractérisé en ce que** ladite accélération longitudinale maximale est comprise entre 0,5 et 1,5 mètres par seconde au carré (m.s⁻²).

11. Procédé selon l'une quelconque des revendications 8 à 10,
**caractérisé en ce que** ladite vitesse longitudinale maximale est variable en fonction d'un taux de descente courant dudit giravion (1).

12. Procédé selon l'une quelconque des revendications 1 à 11,
**caractérisé en ce que** ledit procédé d'assistance (10) comporte au moins une étape d'affichage (18) sur un dispositif d'affichage (30) d'informations représentatives d'un premier écart entre ladite position courante et ledit point de poser (PP).

13. Procédé selon l'une quelconque des revendications 1 à 12,
**caractérisé en ce que** ledit procédé d'assistance (10) comporte au moins une étape d'affichage (19) sur un dispositif d'affichage (30) d'informations représentatives d'un second écart entre ladite position courante et une zone comportant un obstacle.

14. Procédé selon l'une quelconque des revendications 12 à 13,
**caractérisé en ce que**, lesdites informations affichées sont représentatives d'une position angulaire en azimut dudit giravion (1) fonction de ladite position courante par rapport audit point de poser (PP) et/ou par rapport à ladite zone comportant un obstacle.

15. Procédé selon l'une quelconque des revendications 1 à 14,
**caractérisé en ce que** ledit procédé d'assistance comporte au moins une étape d'affichage (20) sur un dispositif d'affichage (30) d'informations représentatives d'un troisième écart entre ladite hauteur courante dudit giravion (1) et ladite hauteur prédéterminée dudit point de décision (TDP, LDP).

## Patentansprüche

1. Verfahren (10) zur Unterstützung der Steuerung eines Drehflügelflugzeugs (1), das mindestens zwei Triebwerke (2, 3) umfasst, die in der Lage sind, sofern keine Störung vorliegt, ein Antriebsmoment auf mindestens einen Hauptrotor (4) zu übertragen, das mindestens ein Schweben des Drehflügelflugzeugs (1) in der Luft gewährleistet, wobei das Drehflügelflugzeug (1) aerodynamische Organe (5) umfasst, die es ermöglichen, das Drehflügelflugzeug (1) zu lenken, wobei das Unterstützungsverfahren (10) die folgenden Schritte umfasst:
- periodisches Bestimmen (12) einer aktuellen Position des Drehflügelflugzeugs (1),
- erstes periodisches Vergleichen (13) der aktuellen Position mit einem Entscheidungspunkt (TDP, LDP), wobei das erste periodische Vergleichen (13) erlaubt zu bestimmen, dass die aktuelle Position des Drehflügelflugzeugs (1) eine aktuelle Höhe aufweist, die geringer ist als eine vorgegebene Höhe des Entscheidungspunkts (TDP, LDP),
- Identifizieren eines Triebwerksversagens (14) von mindestens einem Triebwerk (2, 3) unter den mindestens zwei Triebwerken (2, 3),
- zweites periodisches Vergleichen (15) zwischen der aktuellen Position des Drehflügelflugzeugs (1) und einem Landepunkt (PP),
- periodisches Bestimmen (16) eines Notlandeprofils, wobei das Notlandeprofil zumindest in Abhängigkeit von einem Ergebnis des zweiten periodischen Vergleichens (15) und einer einzuhaltenden Mindestdrehzahl (NRmin) des mindestens einen Hauptrotors (4) erzeugt wird, und
- periodisches Erzeugen (17) von Steuerbefehlen zum Steuern der aerodynamischen Organe (5) und zum Lenken des Drehflügelflugzeugs (1) gemäß dem Notlandeprofil, wobei das periodische Erzeugen (17) von Steuerbefehlen durchgeführt wird, wenn einerseits die aktuelle Position des Drehflügelflugzeugs (1) eine aktuelle Höhe aufweist, die geringer als die vorgegebene Höhe des Entscheidungspunkts (TDP, LDP) ist, und andererseits ein Triebwerksausfall identifiziert wird (14),
**dadurch gekennzeichnet, dass** das Notlandeprofil in Abhängigkeit von einer einzuhaltenden vorgegebenen Sinkrate des Drehflügelflugzeugs (1) erzeugt wird.

2. Verfahren nach Anspruch 1,
**dadurch gekennzeichnet, dass** die vorgegebene Sinkrate in Abhängigkeit von der aktuellen Höhe des Drehflügelflugzeugs (1) variabel ist.

3. Verfahren nach Anspruch 2,
**dadurch gekennzeichnet, dass**, wenn die aktuelle Höhe des Drehflügelflugzeugs (1) größer oder gleich 200 Fuß (60,96 Meter) ist, die vorgegebene Sinkrate gleich einem ersten Schwellenwert zwischen -1200 und -800 Fuß pro Minute (zwischen -365,76 und -243,84 Meter pro Minute) ist.

4. Verfahren nach einem der Ansprüche 2 bis 3,
**dadurch gekennzeichnet, dass**, wenn die aktuelle Höhe des Drehflügelflugzeugs (1) kleiner oder gleich 100 Fuß (30,48 Meter) ist, die vorgegebene Sinkrate gleich einem zweiten Schwellenwert zwischen -700 und -300 Fuß pro Minute (zwischen -213,36 und -91,44 Meter pro Minute) ist.

5. Verfahren nach einem der Ansprüche 2 bis 4,
**dadurch gekennzeichnet, dass**, wenn die aktuelle Höhe des Drehflügelflugzeugs (1) zwischen 100 und 200 Fuß (30,48 und 60,96 Meter) liegt, die vorgegebene Sinkrate gemäß einer linear abnehmenden Funktion zwischen einem ersten Schwellenwert zwischen -1200 und -800 Fuß pro Minute (zwischen -365,76 und -243,84 Metern pro Minute) und einem zweiten Schwellenwert zwischen -700 und -300 Fuß pro Minute (zwischen -213,36 und -91,44 Metern pro Minute) variiert wird.

6. Verfahren nach einem der Ansprüche 1 bis 5,
**dadurch gekennzeichnet, dass** die Mindestdrehzahl (NRmin) ein vorgegebener und fester Wert ist, der zwischen 94% und 105% einer gespeicherten Nenndrehzahl (NRnom) des mindestens einen Hauptrotors (4) liegt.

7. Verfahren nach einem der Ansprüche 1 bis 6,
**dadurch gekennzeichnet, dass** der mindestens eine Hauptrotor (4) mindestens zwei Blätter (6) aufweist und die Steuerbefehle kollektiv eine Steigung von jedem der mindestens zwei Blätter (6) ändern.

8. Verfahren nach einem der Ansprüche 1 bis 7,
**dadurch gekennzeichnet, dass** das periodische Bestimmen (16) des Notlandeprofils einerseits von einer maximalen Längsbeschleunigung des Drehflügelflugzeugs (1) in Bezug auf den Boden und andererseits von einer maximalen Längsvorschubgeschwindigkeit des Drehflügelflugzeugs (1) in Bezug auf den Boden abhängig ist.

9. Verfahren nach Anspruch 8,
**dadurch gekennzeichnet, dass** die maximale Längsbeschleunigung des Drehflügelflugzeugs (1) in Abhängigkeit von einer aktuellen Höhe des Drehflügelflugzeugs (1) und einer Leistungsreserve der mindestens zwei Triebwerke variabel ist, wenn sich das Drehflügelflugzeug (1) in einer Schwebeflugphase mit einer Vertikalgeschwindigkeit von Null befindet.

10. Verfahren nach einem der Ansprüche 8 bis 9,
**dadurch gekennzeichnet, dass** die maximale Längsbeschleunigung zwischen 0,5 und 1,5 Meter pro Quadratsekunde (m.s⁻²) beträgt.

11. Verfahren nach einem der Ansprüche 8 bis 10,
**dadurch gekennzeichnet, dass** die maximale Längsgeschwindigkeit in Abhängigkeit von einer aktuellen Sinkrate des Drehflügelflugzeugs (1) variabel ist.

12. Verfahren nach einem der Ansprüche 1 bis 11,
**dadurch gekennzeichnet, dass** das Unterstützungsverfahren (10) mindestens einen Schritt des Anzeigens (18) von für eine erste Abweichung zwischen der aktuellen Position und dem Landepunkt (PP) repräsentativen Informationen auf einer Anzeigevorrichtung (30) umfasst.

13. Verfahren nach einem der Ansprüche 1 bis 12,
**dadurch gekennzeichnet, dass** das Unterstützungsverfahren (10) mindestens einen Schritt des Anzeigens (19) von für eine zweite Abweichung zwischen der aktuellen Position und einem Bereich mit einem Hindernis repräsentativen Informationen auf einer Anzeigevorrichtung (30) umfasst.

14. Verfahren nach einem der Ansprüche 12 bis 13,
**dadurch gekennzeichnet, dass** die angezeigten Informationen repräsentativ für eine von der aktuellen Position abhängige Azimut-Winkelposition des Drehflügelflugzeugs (1) in Bezug auf den Landepunkt (PP) und/oder in Bezug auf die Zone mit einem Hindernis sind.

15. Verfahren nach einem der Ansprüche 1 bis 14,
**dadurch gekennzeichnet, dass** das Unterstützungsverfahren mindestens einen Schritt des Anzeigens (20) von Informationen auf einer Anzeigevorrichtung (30) umfasst, die für eine dritte Abweichung zwischen der aktuellen Höhe des Drehflügelflugzeugs (1) und der vorgegebenen Höhe des Entscheidungspunkts (TDP, LDP) repräsentativ sind.

## Claims

1. Method for assisting (10) the piloting of a rotorcraft (1) comprising at least two engines (2, 3) which, in the absence of failure, are capable of transmitting engine torque to at least one main rotor (4) at least providing lift to keep said rotorcraft (1) in the air, said rotorcraft (1) comprising aerodynamic members (5) which allow the piloting of said rotorcraft (1), said assistance method (10) comprising the following steps:
• periodically determining (12) a current position of said rotorcraft (1),
• making a first periodic comparison (13) between said current position and a decision point (TDP, LDP), said first periodic comparison (13) making it possible to determine that said current position of said rotorcraft (1) has a current height which is less than a predetermined height of said decision point (TDP, LDP),
• identifying an engine failure (14) in at least one engine (2, 3) of the at least two engines (2, 3);
• making a second periodic comparison (15) between said current position of said rotorcraft (1) and a touchdown point (PP),
• periodically determining (16) an emergency landing profile, said emergency landing profile being generated at least depending on a result of said second periodic comparison (15) and on a minimum speed of rotation (NRmin) of said at least main rotor (4) to be observed, and
• periodically generating (17) control orders to control the aerodynamic members (5) and pilot said rotorcraft (1) according to said emergency landing profile, said periodic generation (17) of control orders being implemented when, on the one hand, said current position of said rotorcraft (1) has a current height which is less than said predetermined height of said decision point (TDP, LDP) and, on the other hand, an engine failure is identified (14),
**characterized in that** said emergency landing profile is generated depending on the predetermined rate of sink of said rotorcraft (1) to be observed.

2. Method according to Claim 1,
**characterized in that** said predetermined rate of sink is variable depending on the current height of said rotorcraft (1).

3. Method according to Claim 2,
**characterized in that** when said current height of said rotorcraft (1) is greater than, or equal to, 200 feet (60.96 metres), said predetermined rate of sink is equal to a first threshold value of between -1200 and -800 feet per minute (between -365.76 and -243.84 metres per minute).

4. Method according to any one of Claims 2 to 3,
**characterized in that** when said current height of said rotorcraft (1) is less than, or equal to, 100 feet (30.48 metres), said predetermined rate of sink is equal to a second threshold value of between -700 and -300 feet per minute (between -213.36 and -91.44 metres per minute).

5. Method according to any one of Claims 2 to 4,
**characterized in that** when said current height of said rotorcraft (1) is between 100 and 200 feet (30.48 and 60.96 metres), said predetermined rate of sink varies according to a linear decreasing function between a first threshold value of between -1200 and -800 feet per minute (between -365.76 and -243.84 metres per minute) and a second threshold value of between -700 and -300 feet per minute (between -213.36 and -91.44 metres per minute).

6. Method according to any one of Claims 1 to 5,
**characterized in that** said minimum speed of rotation (NRmin) is a fixed, predetermined value lying between 94% and 105% of a memorized nominal speed of rotation (NRnom) of said at least one main rotor (4).

7. Method according to any one of Claims 1 to 6,
**characterized in that** said at least one main rotor (4) comprising at least two blades (6), said control orders collectively modify a pitch of each of said at least two blades (6).

8. Method according to any one of Claims 1 to 7,
**characterized in that** said periodic determination (16) of said emergency landing profile depends, on the one hand, on a maximum longitudinal acceleration of said rotorcraft (1) relative to the ground and, on the other hand, on a maximum longitudinal forward speed of said rotorcraft (1) relative to the ground.

9. Method according to Claim 8,
**characterized in that** said maximum longitudinal acceleration of said rotorcraft (1) is variable depending on a current height of said rotorcraft (1) and a power margin of said at least two engines when said rotorcraft (1) is in a hovering flight phase with a vertical speed of zero.

10. Method according to any one of Claims 8 to 9,
**characterized in that** said maximum longitudinal acceleration is between 0.5 and 1.5 metres per second squared (m.s⁻²).

11. Method according to any one of Claims 8 to 10,
**characterized in that** said maximum longitudinal speed is variable depending on a current rate of sink of said rotorcraft (1).

12. Method according to any one of Claims 1 to 11,
**characterized in that** said assistance method (10) comprises at least one step of displaying (18) on a display device (30) information which is representative of a first difference between said current position and said touchdown point (PP).

13. Method according to any one of Claims 1 to 12,
**characterized in that** said assistance method (10) comprises at least one step of displaying (19) on a display device (30) information which is representative of a second difference between said current position and a zone comprising an obstacle.

14. Method according to any one of Claims 12 to 13,
**characterized in that** said displayed information is representative of an azimuthal angular position of said rotorcraft (1) depending on said current position with respect to the touchdown point (PP) and/or with respect to said zone comprising an obstacle.

15. Method according to any one of Claims 1 to 14,
**characterized in that** said method for assisting comprises at least one step of displaying (20) on a display device (30) information which is representative of a third difference between said current height of said rotorcraft (1) and said predetermined height of said decision point (TDP, LDP).
